Europäisches Patentamt

European Patent Office

Office européen des brevets

(11) Veröffentlichungsnummer: **0 520 347 A1**

# (12) EUROPÄISCHE PATENTANMELDUNG

(21) Anmeldenummer: **92110453.5**

(22) Anmeldetag: **20.06.92**

(51) Int. Cl.5: **B29B 15/12**, B29C 67/14

(30) Priorität: **27.06.91 DE 4121200**

(43) Veröffentlichungstag der Anmeldung:
**30.12.92 Patentblatt 92/53**

(84) Benannte Vertragsstaaten:
**CH DE ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Gehrig, Heinz, Dr.**
**Spinozastrasse 30**
**W-6750 Kaiserslautern(DE)**

(54) **Vorrichtung zum Imprägnieren von Fasermaterial mit flüssigem Kunststoff.**

㊗ Zum Imprägnieren von Fasermaterial mit flüssigem Kunststoff wird eine Vorrichtung vorgeschlagen, die eine Imprägnierkammer (2) enthält, die in mehrere Sektionen (S1 bis S7) unterteilt ist und am Ende jeder Sektion eine Düse (D1 bis D7) aufweist. In Sektion S1 mündet ein Rückführkanal (12), in Sektion S2 der Zuführkanal 11 für den Kunststoff. Ab Sektion 3 zweigen jeweils Überströmkanäle (13 bis 17) ab, die in den Rückführkanal münden. Die Querschnitte (A1 bis A7) der Düsen sind in Förderrichtung des Fasermaterials stufenweise kleiner bemessen, wobei die letzte Düse den Kunststoffgehalt des Fasermaterials festlegt.

EP 0 520 347 A1

Die Erfindung betrifft eine Vorrichtung nach dem Oberbegriff des Patentanspruchs 1.

Derartige Vorrichtungen sind in den unterschiedlichsten Ausgestaltungen bekannt. Zum Stand der Technik gehört beispielsweise die US-PS 4 643 126, die eine Vorrichtung zum Imprägnieren von Fasermaterial beschreibt, durch welche das Fasermaterial im wesentlichen geradlinig hindurchbewegt wird. In der Imprägnierkammer der Vorrichtung reichen abwechselnd von der einen und der anderen Seite Stege an die Fasern heran, um diese zu spreizen. An ihren stirnseitigen Enden sind die Stege von U-förmigen Durchgängen begrenzt. Die Imprägnierflüssigkeit wird in einem Kreislauf umgepumpt, wobei sie in der Vorrichtung durch die Stege mäanderförmig von einer auf die andere Seite der Fasern geleitet wird und zum Teil die Stege über die U-förmigen Durchgänge umströmt. Die am Ende der Vorrichtung austretende Überschuß-Flüssigkeit enthält Luft und Faserabrieb und wird über ein Sieb in einen Vorratsbehälter geleitet. Bei entsprechender Verweilzeit im Behälter erfolgt ein Abscheiden der Luft aus dem Gemisch und die Imprägnierflüssigkeit wird wieder in die Vorrichtung gefördert.

Nachteilig dabei ist, daß die Luft und der Faserabrieb mit der Imprägnierflüssigkeit durch die gesamte Vorrichtung hindurchgefördert werden. Weiterhin lassen sich infolge der mäanderförmigen Strömungsführung kaum Schubkräfte auf die Fasern übertragen. Durch die Kreislaufförderung und insbesondere die zum Entlüften erforderliche Verweilzeit der Imprägnierflüssigkeit in dem Vorratsbehälter besteht die Gefahr des Gelierens oder Reagierens der Flüssigkeit. Schließlich wird, abgesehen vom Förderdruck der Umwälzpumpe, kein Druck in der Vorrichtung aufgebaut, so daß häufig nur ein unbefriedigendes Imprägnierergebnis erreicht wird.

Mit der Erfindung soll eine Vorrichtung zum Imprägnieren von Fasermaterial mit flüssigem Kunststoff geschaffen werden, die diese Nachteile vermeidet und insbesondere eine vollständige Benetzung aller Faserelemente mit Kunststoff gewährleistet, die Luft praktisch restlos aus den Faserzwischenräumen beseitigt und sehr große Arbeitsgeschwindigkeiten zuläßt.

Zur Lösung dieser Aufgabe werden die Merkmale nach dem Kennzeichen des Anspruchs 1 vorgeschlagen.

Bei der erfindungsgemäßen Vorrichtung wird das Fasermaterial mit größerem Wandabstand durch die Imprägnierkammer gefördert. Diese besteht aus mehreren aufeinanderfolgenden Sektionen. In der Imprägnierkammer sind kaskadenartig mehrere Düsen angebracht, jeweils eine am Ende einer Kammer-Sektion. Die Querschnitte der Düsen sind in Arbeitsrichtung abgestuft. Vor jeder Düse sind ein oder mehrere seitliche Überströmkanäle vorgesehen, die in einen, gegebenenfalls ein Filter enthaltenden Rückführkanal zusammengeführt sind. Der Rückführkanal mündet vor der ersten Düse in die erste Sektion der Imprägnierkammer, so daß die im Rücklauf enthaltene Luft nach vorne aus der Eintrittsöffnung für das Fasermaterial entweichen kann. Die Eintrittsöffnung für den Kunststoff befindet sich vor der zweiten Düse in der Seitenwand der zweiten Sektion der Imprägnierkammer.

Die Düsen und die Imprägnierkammer sind in ihren Querschnitten - z.B. rund oder schlitzförmig - den Fasermaterialien angepaßt, wobei das Verhältnis zwischen Düsendurchmesser bzw. Düsenbreite und Düsenlänge vorzugsweise um 1 festgelegt wird, um die bei langen und engen Düsen auftretenden hohen Drücke und Abzugskräfte, die zu einem Abriß des Fasermaterials führen können, zu vermeiden. Aus dem gleichen Grund wird vor jeder Düse ein zu hoher Druckaufbau durch teilweise Entlastung über die seitlichen Überströmkanäle verhindert. Dabei wird auch sichergestellt, daß die in jeder Stufe aus dem Fasermaterial ausgepreßte Luft und der nicht vermeidbare Faserabrieb entgegen der Förderrichtung des Fasermaterials nach vorne aus der Eintrittsöffnung entweichen müssen.

Die Durchmesser bzw. Breiten der Imprägnierkammern betragen etwa zwischen dem 1,5- bis 20-fachen der Düsendurchmesser bzw. -breiten, wobei der obere Wert zur Begrenzung des Kammervolumens nicht extrem sein sollte. Die Längen der einzelnen Kammersektionen betragen etwa das 1,5- bis 2O-fache der Kammerdurchmesser bzw. -weite. Die Länge des Überganges zwischen Kammersektion und Düse wird zweckmäßigerweise kurz ausgebildet, etwa im Bereich der Düsenlänge.

Erfindungsgemäß wirken während der Imprägnierung mehrere Druckstöße mit jeweiliger Zwischenentlastung auf das Fasermaterial ein, was zu einem deutlich niedrigeren Endluftgehalt im Fasermaterial führt. Insgesamt hat es sich als zweckmäßig erwiesen, den Düsensatz mit etwa mit 4 bis 7 Stufen auszubilden. Durch die besondere Ausgestaltung der Düsen werden zudem keine übermäßigen Abzugskräfte erforderlich, d.h., es können sehr hohe Arbeitsgeschwindigkeiten realisiert werden, ohne daß das Fasermaterial reißt. Von herausragendem Vorteil ist ferner, daß nur sehr geringe Kunststoffmengen in der Vorrichtung zirkulieren, demnach nur eine kurze Verweilzeit des Kunststoffs gegeben ist und reaktionsfähige Harze somit nicht gelieren bzw. aushärten können. Konstruktionsbedingt ist ein ungehinderter Luftabtransport direkt aus den einzelnen Sektionen der Imprägnierkammer über den gesonderten Rückführkanal in die erste Sektion und hin zur Eintrittsöffnung für das Fasermaterial gewährleistet. Dabei wird die Förderung des Fasermaterials durch die gesamte Imprägnierkammer nicht beeinträchtigt.

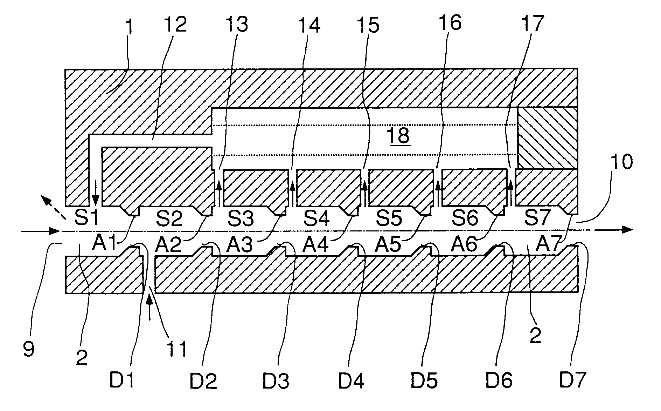

Die Erfindung wird nachfolgend unter Hinweis auf die Zeichnung anhand eines Ausführungsbeispiels näher erläutert.

Im wesentlichen besteht die Vorrichtung aus einem Gehäuse (1), in dem eine kanalförmige Imprägnierkammer (2), bestehend aus den Kammersektionen S1 bis S7, ausgebildet ist. Das Fasermaterial wird von einer Vorratsrolle abgezogen und über die Eintrittsöffnung (9) in die Imprägnierkammer geführt. In der Imprägnierkammer sind jeweils am Ende einer Sektion mehrere hintereinander angeordnete Düsen D1 bis D7 vorgesehen, deren freie Querschnitte A1 bis A7 in Förderrichtung des Fasermaterials stufenweise kleiner dimensioniert sind. Die stirnseitige Austrittsöffnung 10 ist als Kalibrierdüse D7 dem Querschnitt des Fasermaterials angepaßt und so dimensioniert (A7), daß der gewünschte Kunststoffgehalt im Fasermaterial erhalten wird. Mit (11) ist eine Eintrittsöffnung für den flüssigen Kunststoff bezeichnet, die unmittelbar nach der ersten Düse D1 in die zweite Sektion S2 der Imprägnierkammer mündet.

Mit Hilfe einer Pumpe wird der Kunststoff aus einem Vorratsbehälter (in der Zeichnung nicht dargestellt) durch die Eintrittsöffnung (11) in die Imprägnierkammer (2) gefördert. Er trifft dort in Sektion 2 mit entsprechendem Impuls auf das Fasermaterial, wodurch dieses aufgebrochen und durchtränkt wird. Durch die gestuften Düsen D1 bis D7 wird in jeder Sektion der Imprägnierkammer ein Druck aufgebaut, welcher ausreichend groß ist, um die Luft aus dem Fasermaterial zu verdrängen. Aus den Kammer-Sektionen S3 bis S7 zweigen Überströmkanäle (13 bis 17) ab, über die der überschüssige und Gasblasen enthaltende Kunststoff abgeleitet wird. Die Überströmkanäle münden in einen gemeinsamen und vor der ersten Düse D1 wieder an die Sektion 1 der Imprägnierkammer anschließenden Rückführkanal (12). Mit (18) ist ein Filter in dem Rückführkanal bezeichnet.

**Patentansprüche**

1.  Vorrichtung zum Imprägnieren von Fasermaterial mit flüssigem Kunststoff mit einer Eintrittsöffnung (9) und (11) für das Fasermaterial und den Kunststoff sowie eine Austrittsöffnung (10) aufweisenden Imprägnierkammer (2), dadurch gekennzeichnet, daß die Imprägnierkammer (2) in mehrere Sektionen (S1 bis S7) unterteilt ist und am Ende jeder Sektion eine Düse (D1 bis D7) aufweist, wobei in Sektion S1 ein Rückführkanal (12) mündet, in Sektion S2 der Zuführkanal (11) für den Kunststoff und ab Sektion S3 Überströmkanäle (13 bis 17) abzweigen, die in den Rückführkanal münden, und wobei die Querschnitte (A1 bis A7) der Düsen in Förderrichtung des Fasermaterials stufenweise kleiner bemessen sind und mit der letzten Düse der Kunststoffgehalt im Fasermaterial festgelegt wird.

2.  Vorrichtung nach Anspruch 1, dadurch gekennzeichnet, daß das Verhältnis zwischen Düsenlänge und Düsendurchmesser kleiner als 20:1, vorzugsweise kleiner als 2:1 beträgt.

3.  Vorrichtung nach Anspruch 1, dadurch gekennzeichnet, daß die Durchmesser bzw. Breiten der Imprägnierkammern zwischen dem 1,5- bis 20-fachen der Düsendurchmesser bzw. -breiten betragen.

4.  Vorrichtung nach Anspruch 1, dadurch gekennzeichnet, daß die Längen der einzelnen Kammersektionen etwa zwischen dem 1,5- und 20-fachen der Kammerdurchmesser bzw. -weiten liegen.

5.  Vorrichtung nach Anspruch 1, dadurch gekennzeichnet, daß die Übergänge zwischen Kammersektionen und Düsen, bezogen auf die Düsenlänge, vorzugsweise zwischen 0,1 und 5 liegen.

6.  Vorrichtung nach Anspruch 1, dadurch gekennzeichnet, daß der Rückführkanal (12) ein Filter (18) enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 206 134 (BASF)<br>* das ganze Dokument *<br>--- | 1-6 | B29B15/12<br>B29C67/14 |
| D,A | US-A-4 643 126 (WILKINSON ET AL.)<br>* das ganze Dokument *<br>----- | 1-6 | |
| | | | **RECHERCHIERTE SACHGEBIETE (Int. Cl.5)**<br><br>B29B<br>B29C |

Der vorliegende Recherchenbericht wurde für alle Patentansprüche erstellt

| Recherchenort | Abschlußdatum der Recherche | Prüfer |
|---|---|---|
| DEN HAAG | 02 OKTOBER 1992 | VAN WALLENE A.M. |